# FASCICULE DE BREVET EUROPEEN

(11) **EP 0 925 970 B1**
(45) Date de publication et mention de la délivrance du brevet: **04.09.2002**
(21) Numéro de dépôt: 98123533.6
(22) Date de dépôt: 16.12.1998
(51) Int. Cl.: B60H 1/32

(54) **Circuit de climatisation améliorant la gestion de la masse de fluide réfrigérant circulant dans ce circuit**
Klimakreislauf mit verbessertem Kühlflussmengeregelsystem
Air conditioning circuit with improved coolant fluid mass control system

(30) Priorité: 19.12.1997 FR 9716170
(43) Date de publication de la demande: 30.06.1999
(73) Titulaire: VALEO CLIMATISATION, 78321 La Verrière (FR)
(72) Inventeur: Hamery, Bruno, 75010 Paris (FR)

(56) Documents cités:
- US-A- 5 067 327
- US-A- 5 070 705

## Description

L'invention concerne un circuit de fluide réfrigérant, notamment pour un dispositif de climatisation de l'habitacle d'un véhicule, comprenant un compresseur, un condenseur, un détendeur et un évaporateur, se succédant dans cet ordre dans une boucle principale, ainsi qu'un réservoir propre à contenir une quantité variable de fluide réfrigérant à l'état liquide.

Dans les dispositifs connus de ce genre, le réservoir est disposé dans la boucle principale, par exemple entre l'évaporateur et le condenseur, de manière à être traversé par la totalité du fluide en circulation. Dans ces conditions, les variations de la quantité de liquide contenue dans le réservoir résultent intrinsèquement des quantités de fluide condensées dans le condenseur et vaporisées dans l'évaporateur, c'est-à-dire des conditions de fonctionnement de ces deux composants.

Le but de l'invention est de mieux maîtriser le fonctionnement du circuit en imposant si nécessaire des variations de la quantité de fluide à l'état liquide dans le réservoir, et par conséquent de la quantité de fluide circulant effectivement dans la boucle.

L'invention vise notamment un circuit du genre défini en introduction, et prévoit que le réservoir est disposé hors de la boucle principale et relié à celle-ci par le détendeur, ce dernier étant une vanne à au moins trois voies propre à être commandée de manière à permettre le passage du fluide du condenseur au réservoir ou du réservoir à l'évaporateur, et/ou du condenseur à l'évaporateur.

Lorsque du fluide passe du condenseur au réservoir ou du réservoir à l'évaporateur, la quantité de fluide en circulation diminue ou augmente. Lorsque le fluide passe uniquement du condenseur à l'évaporateur, la quantité de fluide en circulation reste constante.

Des caractéristiques optionnelles du circuit selon l'invention, complémentaires ou alternatives, sont énoncées ci-après:
- Le détendeur est une vanne à quatre voies comportant une première entrée reliée au condenseur, une première sortie reliée à l'évaporateur, et une seconde entrée et une seconde sortie reliées au réservoir par des conduites respectives.
- Lesdites conduites communiquent respectivement avec la partie inférieure et avec la partie supérieure du réservoir. Cette disposition permet de n'envoyer du réservoir à l'évaporateur que du fluide à l'état liquide, qui s'est rassemblé à la partie inférieure du réservoir.
- Le détendeur est propre à être commandé de manière à régler le débit du fluide du condenseur à l'évaporateur indépendamment de toute variation de la quantité de fluide dans le réservoir.
- Le réservoir est à une température inférieure à la température d'équilibre gaz/liquide dans le condenseur.
- Il comprend un capteur de pression et/ou un capteur de température en amont du détendeur.
- Le capteur de pression et/ou le capteur de température amont sont disposés entre le condenseur et le détendeur.
- Il comprend un capteur de pression et/ou un capteur de température en aval du détendeur.
- Le capteur de pression et/ou le capteur de température aval sont disposés entre l'évaporateur et le compresseur.
- Le détendeur et le réservoir sont intégrés en un composant unitaire raccordé au condenseur et à l'évaporateur.
- Des capteurs de pression et/ou de température amont et/ou aval sont intégrés dans ledit composant unitaire.
- Un filtre pour le fluide est intégré dans ledit composant unitaire, en amont du détendeur.
- Un déshydratant pour le fluide est intégré dans ledit composant unitaire, notamment dans le réservoir.
- Il comprend en outre une unité de commande pour le détendeur, reliée le cas échéant aux capteurs de pression et/ou de température.

Les caractéristiques et avantages de l'invention seront exposés plus en détail dans la description ci-après, en se référant aux dessins annexés, sur lesquels:
- la figure 1 est un schéma d'un circuit de fluide réfrigérant selon l'invention destiné à la climatisation de l'habitacle d'un véhicule automobile; et
- la figure 2 est une représentation schématique d'un composant unitaire propre à faire partie de ce circuit.

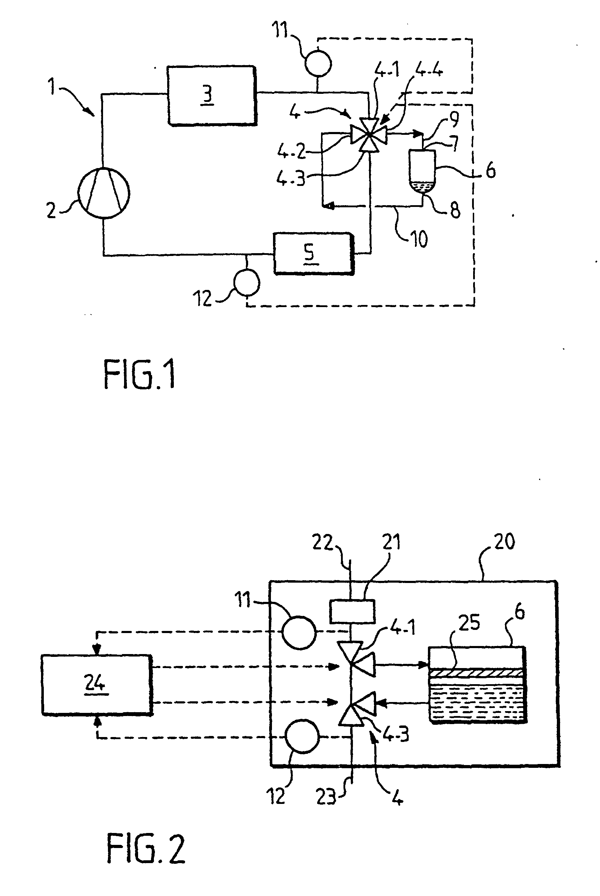

Le circuit de la figure 1 comprend de façon classique une boucle principale 1 dans laquelle un compresseur 2, un condenseur 3, un détendeur 4 et un évaporateur 5 sont disposés de manière à être parcourus dans cet ordre par un fluide réfrigérant qui passe de l'état gazeux à l'état liquide dans le condenseur et de l'état liquide à l'état gazeux dans l'évaporateur.

Le circuit comprend également un réservoir de fluide 6 dans lequel une quantité variable de fluide à l'état liquide peut s'accumuler de manière à faire varier la quantité de fluide en circulation dans la boucle 1. Le réservoir 6 présente une entrée de fluide 7 disposée à sa partie supérieure et une sortie de fluide 8 disposée à sa partie inférieure.

Selon l'invention, le détendeur 4 est sous forme d'une vanne à quatre voies présentant deux entrées 4-1 et 4-2 et deux sorties 4-3 et 4-4, reliées respectivement à la sortie du condenseur 3, à la sortie 8 du réservoir, à l'entrée de l'évaporateur 5 et à l'entrée 7 du réservoir. Le détendeur 4 et le réservoir 6 forment avec les conduites 9, 10 qui les relient entre eux une boucle secondaire du circuit de fluide réfrigérant.

Le détendeur 4 peut être commandé de manière à faire communiquer soit son entrée 4-1 et sa sortie 4-4 pour introduire du fluide dans le réservoir 6, soit son entrée 4-2 et sa sortie 4-3 pour extraire du fluide du réservoir. En fonctionnement normal, l'entrée 4-1 communique avec la sortie 4-3 pour assurer la circulation du fluide dans la boucle principale, cette circulation pouvant s'accompagner, à des moments appropriés, de l'introduction de fluide dans le réservoir ou de l'extraction de fluide du réservoir comme il vient d'être décrit. Bien entendu, le passage du fluide de l'entrée 4-1 à la sortie 4-3 s'accompagne d'une détente, et le débit de fluide correspondant peut être réglé indépendamment du débit vers le réservoir ou depuis celui-ci.

De façon connue, le réservoir peut remplir la fonction de déshydratation du fluide.

La variation commandée de la quantité de fluide circulant dans la boucle principale peut être utilisée pour optimiser à tout moment le fonctionnement de celle-ci, notamment en vue d'obtenir les effets suivants:
- réduire au minimum la masse de fluide dans le condenseur et par conséquent la pression de condensation et la puissance absorbée par le compresseur;
- limiter la surchauffe à la sortie de l'évaporateur, optimisant ainsi l'utilisation de celui-ci quant à la surface d'échange et à la pression de fonctionnement et assurant la sécurité du compresseur;
- régler le degré de sous-refroidissement dans le condenseur.

Il est possible également, en faisant varier le degré de sous-refroidissement, d'obtenir une augmentation transitoire de l'enthalpie du fluide.

Il est souhaitable de placer le réservoir de telle façon que sa température soit inférieure à la température d'équilibre gaz/liquide dans le condenseur. Avantageusement, sa température est comprise entre la température d'équilibre de phases dans le condenseur et la température d'équilibre de phases dans l'évaporateur.

Le détendeur 4 peut agir notamment en fonction des caractéristiques de pression et de température du fluide mesurées par des capteurs appropriés. A titre d'exemple, on a représenté sur la figure 1 des capteurs de température et de pression 11 placés à la sortie du condenseur 3, et des capteurs de pression et de température 12 placés à la sortie de l'évaporateur 5.

La figure 2 représente schématiquement un composant unitaire 20 renfermant un détendeur 4, un réservoir 6 comportant un déshydratant 25 pour le fluide réfrigérant, et des capteurs de température et de pression 11, 12, tels que décrits ci-dessus, ainsi qu'un filtre 21. Le composant 20 présentant une entrée 22 et une sortie 23 qui peuvent être raccordées respectivement à la sortie du condenseur 3 et à l'entrée de l'évaporateur 5 de la figure 1 pour former avec ces derniers et la partie de la boucle 1 allant de l'évaporateur au condenseur un circuit selon l'invention. L'entrée 22 est reliée à l'entrée 4-1 du détendeur par l'intermédiaire du filtre 21, et la sortie 23 est reliée à la sortie 4-3 du détendeur. Les capteurs 11 sont disposés entre le filtre 21 et le détendeur 4, et les capteurs 12 entre le détendeur et la sortie 23.

La figure 2 montre également une unité de commande 24 recevant les signaux de détection des capteurs 11, 12 et envoyant des signaux de commande au détendeur 4.

L'utilisation du composant 20 permet de simplifier le montage du circuit.

## Revendications

1. Circuit de fluide réfrigérant, notamment pour un dispositif de climatisation de l'habitacle d'un véhicule, comprenant un compresseur (2), un condenseur (3), un détendeur (4) et un évaporateur (5), se succédant dans cet ordre dans une boucle principale (1), ainsi qu'un réservoir (6) propre à contenir une quantité variable de fluide réfrigérant à l'état liquide, **caractérisé en ce que** le réservoir est disposé hors de la boucle principale et relié à celle-ci par le détendeur, ce dernier étant une vanne à au moins trois voies propre à être commandée de manière à permettre le passage du fluide du condenseur au réservoir ou du réservoir à l'évaporateur, et/ou du condenseur à l'évaporateur.

2. Circuit selon la revendication 1, **caractérisé en ce que** le détendeur est une vanne à quatre voies comportant une première entrée (4-1) reliée au condenseur, une première sortie (4-3) reliée à l'évaporateur, et une seconde entrée (4-2) et une seconde sortie (4-4) reliées au réservoir par des conduites respectives (10, 9).

3. Circuit selon la revendication 2, **caractérisé en ce que** lesdites conduites communiquent respectivement avec la partie inférieure (8) et avec la partie supérieure (7) du réservoir.

4. Circuit selon l'une des revendications précédentes, **caractérisé en ce que** le détendeur est propre à être commandé de manière à régler le débit du fluide du condenseur à l'évaporateur indépendamment de toute variation de la quantité de fluide dans le réservoir.

5. Circuit selon l'une des revendications précédentes, **caractérisé en ce que** le réservoir est à une température inférieure à la température d'équilibre gaz/liquide dans le condenseur.

6. Circuit selon l'une des revendications précédentes, **caractérisé en ce qu'**il comprend un capteur de pression et/ou un capteur de température (11) en amont du détendeur.

7. Circuit selon la revendication 6, **caractérisé en ce que** le capteur de pression et/ou le capteur de température amont sont disposés entre le condenseur et le détendeur.

8. Circuit selon l'une des revendications précédentes, **caractérisé en ce qu'**il comprend un capteur de pression et/ou un capteur de température (12) en aval du détendeur.

9. Circuit selon la revendication 8, **caractérisé en ce que** le capteur de pression et/ou le capteur de température aval sont disposés entre l'évaporateur et le compresseur.

10. Circuit selon l'une des revendications précédentes, **caractérisé en ce que** le détendeur et le réservoir sont intégrés en un composant unitaire (20) raccordé au condenseur et à l'évaporateur.

11. Circuit selon la revendication 10, rattachée à l'une des revendications 6 à 8, **caractérisé en ce que** des capteurs de pression et/ou de température amont (11) et/ou aval (12) sont intégrés dans ledit composant unitaire.

12. Circuit selon l'une des revendications 10 et 11, **caractérisé en ce qu'**un filtre (21) pour le fluide est intégré dans ledit composant unitaire, en amont du détendeur.

13. Circuit selon l'une des revendications 10 à 12, **caractérisé en ce qu'**un déshydratant (25) pour le fluide est intégré dans ledit composant unitaire.

14. Circuit selon la revendication 13, **caractérisé en ce que** le déshydratant (25) est intégré dans le réservoir (6).

15. Circuit selon l'une des revendications précédentes, **caractérisé en ce qu'**il comprend en outre une unité de commande (24) pour le détendeur, reliée le cas échéant aux capteurs de pression et/ou de température.

## Patentansprüche

1. Kältemittelfluidkreis, insbesondere für eine Klimaanlage eines Kraftfahrzeuginnenraumes, umfassend einen Kompressor (2), einen Kondensator (3), einen Druckminderer (4) und einen Verdampfer (5), in dieser Reihenfolge nacheinander angeordnet in einem Hauptkreis (1), sowie ein Reservoir (6), welches eine variable Menge an Kältemittelfluid in flüssigem Zustand enthalten kann, **dadurch gekennzeichnet, dass** das Reservoir außerhalb des Hauptkreises angeordnet ist und diesbezüglich verbunden ist durch den Druckminderer, wobei letzterer ein Ventil mit zumindest drei Wegen ist, geeignet, um in solch einer Weise gesteuert zu werden, dass der Fluiddurchtritt von dem Kondensator zu dem Reservoir oder von dem Reservoir zu dem Verdampfer und/oder von dem Kondensator zum Verdampfer ermöglicht ist.

2. Kreis nach Anspruch 1, **dadurch gekennzeichnet, dass** der Druckminderer ein Vier-Wege-Ventil ist, umfassend einen ersten Eingang (4-1), der mit dem Kondensator verbunden ist, einen ersten Ausgang (4-3), der mit dem Verdampfer verbunden ist, und einen zweiten Eingang (4-2) sowie einen zweiten Ausgang (4-4), die mit dem Reservoir durch jeweilige Leitungen (10, 9) verbunden sind.

3. Kreis nach Anspruch 2, **dadurch gekennzeichnet, dass** die Leitungen jeweils mit dem unteren Abschnitt (8) und dem oberen Abschnitt (7) des Reservoirs kommunizieren oder in Verbindung stehen.

4. Kreis nach einem der vorangegangenen Ansprüche, **dadurch gekennzeichnet, dass** der Druckminderer in der Lage ist, in solcher einer Weise gesteuert zu werden, dass der Fluiddurchsatz von dem Kondensator zu dem Verdampfer unabhängig von jeglicher Veränderung der Menge an Fluid in dem Reservoir gesteuert werden kann.

5. Kreis nach einem der vorangegangenen Ansprüche, **dadurch gekennzeichnet, dass** das Reservoir bei einer Temperatur vorliegt, die niedriger ist als die Gas/Flüssigkeit-Gleichgewichtstemperatur in dem Kondensator.

6. Kreis nach einem der vorangegangenen Ansprüche, **dadurch gekennzeichnet, dass** flussaufwärtsliegend des Druckminderers ein Drucksensor und/oder ein Temperatursensor (11) vorgesehen ist/sind.

7. Kreis nach Anspruch 6, **dadurch gekennzeichnet, dass** der flussaufwärtsliegende Drucksensor und/oder Temperatursensor zwischen dem Kondensator und dem Druckminderer vorliegt/vorliegen.

8. Kreis nach einem der vorangegangenen Ansprüche, **dadurch gekennzeichnet, dass** flussabwärtsliegend des Druckminderers ein Drucksensor und/oder ein Temperatursensor (12) vorgesehen ist/sind.

9. Kreis nach Anspruch 8, **dadurch gekennzeichnet, dass** der flussabwärtsliegende Drucksensor und/oder Temperatursensor zwischen dem Verdampfer und dem Kompressor vorliegt bzw. vorliegen.

10. Kreis nach einem der vorangegangenen Ansprüche, **dadurch gekennzeichnet, dass** der Druckminderer und das Reservoir in einem einstückigen Bauteil (20) integriert sind, angeschlossen an den Kondensator und den Verdampfer.

11. Kreis nach Anspruch 10, wenn abhängig von einem der Ansprüche 6 bis 8, **dadurch gekennzeichnet, dass** die Druck- und/oder Temperatursensoren flussaufwärtsliegend (11) und/oder flussabwärtsliegend (12) in dem einstückigen Bauteil integriert sind.

12. Kreis nach einem der Ansprüche 10 und 11, **dadurch gekennzeichnet, dass** ein Filter (21) für das Fluid in dem einstückigen Bauteil, flussaufwärtsliegend des Druckminderers, integriert ist.

13. Kreis nach einem der Ansprüche 10 bis 12, **dadurch gekennzeichnet, dass** eine Entfeuchtungseinrichtung (25) für das Fluid in dem einstückigen Bauteil integriert ist.

14. Kreis nach Anspruch 13, **dadurch gekennzeichnet, dass** die Entfeuchtungseinrichtung bzw. der Entfeuchter (25) in dem Reservoir (6) integriert ist.

15. Kreis nach einem der vorangegangenen Ansprüche, **dadurch gekennzeichnet, dass** ferner eine Steuereinheit (24) für den Druckminderer vorgesehen ist, verbunden mit, insoweit vorhanden, den Druck- und/oder Temperatursensoren.

## Claims

1. A refrigerant fluid circuit, especially for an air conditioning apparatus for a motor vehicle cabin, comprising a compressor (2), a condenser (3), an expansion device (4) and an evaporator (5), arranged in that order of succession in a main loop (1), together with a reservoir (6) for containing a variable quantity of refrigerant fluid in the liquid state, **characterised in that** the reservoir is disposed outside the main loop, and is connected to the latter through the expansion device, this latter being a valve with at least three ways, which is arranged to be controlled in such a way as to permit the fluid to pass from the condenser to the reservoir or from the reservoir to the evaporator, and/or from the condenser to the evaporator.

2. A circuit according to Claim 1, **characterised in that** the expansion device is a four-way valve having a first inlet (4-1) connected to the condenser, a first outlet (4-3) connected to the evaporator, and a second inlet (4-2) and second outlet (4-4) which are connected to the reservoir through respective ducts (10, 9).

3. A circuit according to Claim 2, **characterised in that** the said ducts are in communication with the lower part (8) and the upper part (7) of the reservoir, respectively.

4. A circuit according to one of the preceding Claims, **characterised in that** the expansion device is arranged to be so controlled as to regulate the flow of the fluid from the condenser to the evaporator independently of any variation in the amount of fluid in the reservoir.

5. A circuit according to one of the preceding Claims. **characterised in that** the reservoir is at a temperature lower than the gas/liquid equilibrium temperature in the condenser.

6. A circuit according to one of the preceding Claims, **characterised in that** it includes a pressure sensor and/or a temperature sensor (11) upstream of the expansion device.

7. A circuit according to Claim 6, **characterised in that** the upstream pressure sensor and/or temperature sensor are disposed between the condenser and the expansion device.

8. A circuit according to one of the preceding Claims, **characterised in that** it includes a pressure sensor and/or a temperature sensor (12) downstream of the expansion device.

9. A circuit according to Claim 8, **characterised in that** the downstream pressure sensor and/or temperature sensor are disposed between the evaporator and the compressor.

10. A circuit according to one of the preceding Claims, **characterised in that** the expansion device and the reservoir are incorporated in a unitary component (20) which is connected to the condenser and the evaporator.

11. A circuit according to Claim 10 when dependent on one of Claims 6 to 8, **characterised in that** upstream (11) or downstream (12) pressure and/or temperature sensors are incorporated in the said unitary component.

12. A circuit according to Claim 10 or Claim 11, **characterised in that** a filter (21) for the fluid is incorporated in the said unitary component, upstream of the expansion device.

13. A circuit according to one of Claims 10 to 12, **characterised in that** a dehydrator (25) for the fluid is incorporated in the said unitary component.

14. A circuit according to Claim 13, **characterised in that** the dehydrator (25) is incorporated in the reservoir (6).

15. A circuit according to one of the preceding Claims, **characterised in that** it further includes a control unit (24) for the expansion device, connected as appropriate to the pressure and/or temperature sensors.
